# Europäisches Patentamt
## European Patent Office
## Office européen des brevets

(11) Veröffentlichungsnummer: **0 179 305**
**B1**

(12) # EUROPÄISCHE PATENTSCHRIFT

(45) Veröffentlichungstag der Patentschrift:
**10.01.90**

(51) Int. Cl.⁴: **C 08 F 6/20, C 08 L 27/16**

(21) Anmeldenummer: **85112314.1**

(22) Anmeldetag: **28.09.85**

(54) **Konzentrierte, wässrige Dispersionen von Vinylidenfluorid-Polymeren und Verfahren zu deren Herstellung.**

(30) Priorität: **11.10.84 DE 3437278**

(43) Veröffentlichungstag der Anmeldung:
**30.04.86 Patentblatt 86/18**

(45) Bekanntmachung des Hinweises auf die Patenterteilung:
**10.01.90 Patentblatt 90/2**

(84) Benannte Vertragsstaaten:
**DE FR GB IT NL**

(56) Entgegenhaltungen:
**US-A- 3 316 201**
**US-A- 3 857 730**
**US-A- 4 369 266**

(73) Patentinhaber: **HOECHST AKTIENGESELLSCHAFT,
Postfach 80 03 20, D-6230 Frankfurt am Main 80 (DE)**

(72) Erfinder: **Hengel, Rolf, Dr., Watzmannring 37,
D-8269 Burgkirchen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft konzentrierte, wäßrige, kolloidale Dispersionen von Copolymeren des Vinylidenfluorids, die mindestens 5 Gew.-% Vinylidenfluorid und neben Vinylidenfluorid mindestens eine weitere fluorolefinische Verbindung enthalten, mit einem Feststoffgehalt von 30 bis 65 Gew.-% und mit einem Gehalt an Dispersionsstabilisator sowie ein Verfahren zu deren Herstellung.

Wäßrige, kolloidale Dispersionen von Fluorpolymeren werden in großem Umfang für die Beschichtung und Tränkung von Substraten der verschiedensten Art verwendet. Direkt aus dem Polymerisationsprozeß erhaltene wäßrige, kolloidale Dispersionen sind jedoch für diesen Zweck wenig geeignet, da die Homo- oder Copolymerisationsverfahren für fluorhaltige Monomere ohne übermäßige Koagulatbildung meist nur bis zu einem Feststoffgehalt an Polymerisat im Bereich von 30 Gew.-% geführt werden können. Beschichtungen mit solchen Dispersionen sind jedoch unökonomisch und wenig befriedigend, da nicht nur eine übermäßige Menge an Wasser nach dem Beschichtungsvorgang verdampft werden muß, sondern auch die Schichtdicke und die Filmbildungseigenschaften den gestellten Anforderungen nicht genügen. Es ist daher üblich und dem Fachmann wohlbekannt, solche Dispersionen einem Aufkonzentrierungsverfahren zu unterwerfen, das den Feststoffgehalt auf Werte von bis zu 65 Gew.-% erhöht. Solche bekannten Aufkonzentrierungsverfahren sind schonendes Eindampfen im Vakuum (US-PS 3 316 201), Aufkonzentrieren durch Elektrodekantation (GB-PS 642 025), oder durch Ultrafiltration (US-PS 4 369 266). Bei diesen Verfahren ist es erforderlich, einen anionischen, nichtionischen oder auch kationischen Dispersionsstabilisator zuzusetzen, der die Koagulation des kolloidal verteilten Fluorpolymeren verhindern soll. Besonders häufig werden für solche Zwecke in Handelsprodukten alkoxylierte Alkylphenole, aber auch Alkalilaurylsulfat eingesetzt. Auch die Verwendung von Alkali- und Ammoniumstearaten ist bereits beschrieben worden. Alle diese Dispersionsstabilisatoren, die vor oder während des Aufkonzentrierungsprozesses hinzugegeben werden, verbleiben in der Dispersion und sollen insbesondere auch die Stabilität bei Lagerung und Transport zum Einsatzort der Dispersion gewährleisten. Die Anwesenheit solcher Dispersionsstabilisatoren bei Beschichtungsprozessen, wie sie mit solchen konzentrierten, wäßrigen Fluorpolymeren-Dispersionen durchgeführt werden, bringt jedoch auch Nachteile mit sich. Vor allem bei Polymeren des Vinylidenfluorids, die verhältnismäßig niedrige Einbrenntemperaturen erfordern und daher zur Gewebebeschichtung besondes geeignet sind, wird beobachtet, daß die erhaltenen Überzüge nach dem Einbrennen beträchtliche Verfärbungen aufweisen und die darin verbliebenen Anteile an Dispersionsstabilisatoren zum «Ausschwitzen» neigen, was eine klebrige Oberfläche des Überzugs hervorruft und dessen Antiadhäsivität und Anschmutzverhalten sehr nachteilig beeinflußt.

Um diese Nachteile zu beseitigen, wird gemäß der vorliegenden Erfindung eine konzentrierte, wäßrige, kolloidale Dispersion der eingangs genannten Art vorgeschlagen, die dadurch gekennzeichnet ist, daß sie 2 bis 8 Gew.-%, bezogen auf den Feststoff in der konzentrierten Dispersion, mindestens eines Ammoniumsalzes einer Carbonsäure mit 10 bis 14 C-Atomen als Dispersionsstabilisator enthält.

Vorzugsweise enthalten die erfindungsgemäßen Dispersionen 3 bis 6 Gew.-%, bezogen auf den Feststoff in der konzentrierten Dispersion, des genannten Ammoniumsalzes. Es kann sich dabei auch um Gemische solcher Ammoniumsalze im genannten C-Zahl-Bereich handeln. Vorzugsweise werden die Ammoniumsalze geradkettiger Carbonsäuren eingesetzt. Besonders bevorzugt ist das Ammoniumlaurat.

Bei den erfindungsgemäßen kolloidalen, wäßrigen Dispersionen handelt es sich um solche von Copolymeren des Vinylidenfluorids mit fluorolefinischen Comonomeren. Diese fluorolefinischen Comonomeren sind vorzugsweise solche der Formel

$$XYC{=}CF{-}Rf,$$

worin
X = F, Cl, H und
Y = F, Cl, H und
Rf = F, $CF_3$, oder
ein Perfluoralkoxyrest mit 1 bis 4, vorzugsweise 3 C-Atomen in der Perfluoralkylgruppe ist; ausgenommen ist Vinylidenfluorid selbst. Auch Dispersionen von mehreren dieser Copolymeren im Gemisch können eingesetzt werden. Der Gehalt dieser Copolymeren an Vinylidenfluorid beträgt mindestens 5 Gew.-%.

Insbesondere betrifft die vorliegende Erfindung konzentrierte, kolloidale, wäßrige Dispersionen der folgenden Copolymeren des Vinylidenfluorids: Copolymere aus Vinylidenfluorid und Hexafluorpropylen; Copolymere aus Vinylidenfluorid und Chlortrifluorethylen; Copolymere aus Vinylidenfluorid und Tetrafluorethylen; Copolymere aus Vinylidenfluorid und einem perfluorierten Alkylvinylether der Formel

$$CF_2{=}CF{-}O{-}Rf',$$

worin Rf' ein gesättigter Perfluoralkylrest mit 1 bis 4 C-Atomen ist; Copolymere aus Vinylidenfluorid, Tetrafluorethylen und einem perfluorierten Alkylvinylether (z. B. Perfluoropropylperfluorovinylether) der vorstehend genannten Formel, die gegebenenfalls zusätzlich noch Hexafluorpropylen enthalten; sowie besonders bevorzugt Copolymere aus Vinylidenfluorid, Tetrafluorethylen und Hexafluorpropylen. Die genannten Copolymere umfassen dabei sowohl solche mit überwiegend thermoplastischen Eigenschaften als auch solche mit elastomeren Eigenschaften. Die Herstellung der Ausgangs-Latices solcher Copolymerer des Vinylidenfluorids, die üblicherweise durch Copolymerisation der jeweiligen Monomeren in Gegenwart fluorierter Emulgatoren erfolgt, ist dem Fachmann bekannt. Im einzelnen wird beschrieben die Herstellung wäßriger, kolloidaler Dispersionen des Copolymeren aus Vinylidenfluorid und Hexafluorpropylen in den US-Patentschriften 3006881, 3051677 und 3178399; die Herstellung des Copolymeren aus Vinylidenfluorid und Chlortrifluorethylen in den US-Patentschriften 3006881, 3072590 und 3163628; die Herstellung des Copolymeren aus Vinylidenfluorid und Tetrafluorethylen in den US-Patentschriften 2468054 und 3163628 sowie in der DE-PS 1074268; die Herstellung des Copolymeren aus Vinylidenfluorid und einem Perfluoralkylvinylether in der US-PS 3136745; die Herstellung des Copolymeren aus Vinylidenfluorid, Tetrafluorethylen und einem perfluorierten Vinylether bzw. aus Vinylidenfluorid, Tetrafluorethylen, einem perfluorierten Vinylether und Hexafluorpropylen in der US-PS 3235537, und EP-PS 2809 und der DE-AS 2457102; sowie schließlich die Herstellung des Copolymeren aus Vinylidenfluorid, Tetrafluorethylen und Hexafluorpropylen in den US-Patentschriften 2968649 und 4123603, der DE-OS 2635402 und der US-PS 4335238. Insbesondere können alle diese Copolymeren des Vinylidenfluorids auch hergestellt werden in Gegenwart von Permanganaten als Initiatoren wie beschrieben in der US-PS 3632847.

Die so hergestellten wäßrigen, kolloidalen Ausgangsdispersionen enthalten einen Emulgator, vorzugsweise das Salz einer perfluorierten oder mit Fluor und Chlor substituierten Carbonsäure. Dieser Emulgator kann jedoch die Stabilität der konzentrierten kolloidalen Dispersion während des Aufkonzentrierungsvorgangs und bei der Lagerung und beim Transport der konzentrierten Dispersion allein nicht gewährleisten, auch wenn sein Anteil durch Zusatz über die von der Polymerisation her vorhandene Menge erhöht wird. Deshalb ist vor oder während des Aufkonzentrierungsprozesses nach einem der eingangs genannten Verfahren, auf die hier ausdrücklich Bezug genommen wird, ein Dispersionsstabilisator zuzusetzen.

Die Wahl eines Ammoniumsalzes einer $C_{10}$- bis $C_{14}$-Carbonsäure, insbesondere des Ammoniumlaurats, bringt folgende Vorteile mit sich: Die beim Einsatz anderer, insbesondere der üblichen nichtionischen Dispersionsstabilisatoren, in den Überzügen beim Einbrennen sich bildenden starken und meist unregelmäßigen Verfärbungen sind weitgehend beseitigt. Die mit den erfindungsgemäßen konzentrierten Dispersionen von Vinylidenfluorid-Polymeren beschichteten Substrate, insbesondere Gewebe, weisen eine gleichmäßige, opak-weiße bis schwach gelbliche Farbe auf. Auf der Oberfläche solcher Beschichtungen sind keinerlei Spuren des Dispersionsstabilisators festzustellen, die Oberfläche fühlt sich trocken und glatt an. Dadurch ist das Anschmutzverhalten erheblich verbessert, das antiadhäsive Verhalten des Fluorpolymeren ist nicht beeinträchtigt. Schließlich sind die erfindungsgemäßen konzentrierten, wäßrigen Dispersionen von Vinylidenfluorid-Polymerisaten absolut lagerstabil; eine Koagulation auch während monatelanger Lagerung ist nicht festzustellen.

Die Vorteile lassen sich mit bekannten Dispersionsstabilisatoren oder Emulgatoren nicht erreichen. Während beim Einsatz von nichtionischen Dispersionsstabilisatoren oder von Alkalialkylsulfaten die hergestellten Beschichtungen neben starken Verfärbungen eine klebrige Oberfläche aufweisen, wodurch die antiadhäsiven Eigenschaften des Fluorpolymeren weitgehend zunichte gemacht werden, erhält man bei Zusatz von Ammoniumstearat eine so schlechte Lagerstabilität, daß eine Weiterverarbeitung nur innerhalb weniger Stunden möglich ist. Alkalilaurate ergeben gleichfalls verfärbte und klebrige Beschichtungen, bei den Alkalisalzen längerkettiger Carbonsäuren kommt noch die schlechte Lagerstabilität hinzu.

Die erfindungsgemäßen Dispersionen können noch übliche Zusätze enthalten, wie beispielsweise Füllstoffe und Pigmente, z.B. Titandioxid, Antimontrioxid, Ruß oder Farbpigmente, ferner Viskositätsregler oder Antifoulingmittel oder Bakterizide.

Die erfindungsgemäßen Dispersionen werden verwendet insbesondere zur Beschichtung organischer und anorganischer Gewebe aus Natur- und Synthesefasern, Mineralfasern, Glasfasern oder Kohlefasern. Sie sind aber auch geeignet als Überzüge für andere metallische oder nicht-metallische, geschlossene Oberflächen, beispielsweise für die Beschichtung von optischen Kabeln.

Die Erfindung wird durch folgende Beispiele erläutert:

Beispiel 1

4 kg einer 20 gew.-%igen Dispersion eines Copolymeren aus 90 Gew.-% Vinylidenfluorid und 10 Gew.-% Hexafluorpropylen werden mit 200 ml einer 20 gew.-%igen Ammoniumlauratlösung versetzt. Der pH-Wert der Copolymer-Dispersion wird dann auf 6 bis 7 eingestellt und die Dispersion am Umlaufverdampfer bis auf einen Feststoffgehalt von 55 Gew.-% aufkonzentriert. Ein Tropfen Dispersion wird bei 200 °C auf eine Kofler-Heizbank gegeben. Es bleibt ein farbloser Rückstand. Ein Polyestergewebe wird 3 mal in die Dispersion getaucht und bei 200 °C getrocknet. Es entsteht eine ganz schwach gelblich gefärbte Beschichtung. Die Beschichtung wird von Wasser nicht benetzt. Die Oberfläche ist glatt und trocken.

Beispiel 2

40 kg einer 30 gew.-%igen Dispersion eines Terpolymeren aus 55 Gew.-% Vinylidenfluorid, 25 Gew.-% Hexafluorpropylen und 20 Gew.-% Tetrafluorethylen werden mit 3 l einer 20 gew.-%igen Ammoniumlauratlösung versetzt. Man stellt den pH-Wert auf 6 bis 7 ein und konzentriert die Dispersion am Umlaufverdampfer auf 55 Gew.-% Feststoff auf. Ein Tropfen Dispersion wird bei 200 °C auf eine Kofler-Heizbank gegeben, es bleibt ein farbloser Rückstand. Ein Polyestergewebe wird 3mal in die Dispersion getaucht und bei 200 °C getrocknet. Es entsteht eine ganz schwach gelblich gefärbte Beschichtung, die von Wasser nicht benetzt wird. Die Oberfläche ist glatt und trocken.

Beispiel 3

800 kg einer 30 gew.-%igen Dispersion eines Terpolymeren aus 60 Gew.-% Tetrafluorethylen, 25 Gew.-% Vinylidenfluorid und 15 Gew.-% Hexafluorpropylen werden mit 60 l einer 20 gew.-%igen Ammoniumlauratlösung versetzt. Man stellt den pH-Wert auf 6 bis 7 ein und konzentriert die Dispersion an einer Ultrafiltrationsanlage mittels Schlauchmembranen des Typs Nadir® auf 55 Gew.-% Feststoff auf. Ein Tropfen Dispersion wird bei 200 °C auf eine Kofler-Heizbank gegeben, es bleibt ein farbloser Rückstand. Ein Polyestergewebe wird 3 mal in die Dispersion getaucht und bei 200 °C getrocknet. Es entsteht eine porenfreie, ganz schwach gelblich gefärbte Beschichtung, die von Wasser nicht benetzt wird. Die Oberfläche ist glatt und trocken.

**Patentansprüche**

1. Konzentrierte, wäßrige, kolloidale Dispersion mindestens eines Copolymeren des Vinylidenfluorids, das mindestens 5 Gew.-% Vinylidenfluorid und neben Vinylidenfluorid mindestens eine weitere fluorolefinische Verbindung enthält, mit einem Feststoffgehalt von 30 bis 65 Gew.-%, bezogen auf das Gesamtgewicht der konzentrierten Dispersion, und mit einem Gehalt an Dispersionsstabilisator, dadurch gekennzeichnet, daß sie 2 bis 8 Gew.-%, bezogen auf den Feststoff der konzentrierten Dispersion, mindestens eines Ammoniumsalzes einer Carbonsäure mit 10 bis 14 C-Atomen als Dispersionsstabilisator, enthält.

2. Konzentrierte, wäßrige, kolloidale Dispersion eines Copolymeren des Vinylidenfluorids gemäß Anspruch 1, dadurch gekennzeichnet, daß das Copolymere neben Vinylidenfluorid mindestens eine weitere fluorolefinische Verbindung der Formel

$$XYC = CF - Rf$$

enthält, worin
  X = F, Cl, H und
  Y = F, Cl, H und
  Rf = F, $CF_3$ oder
ein Perfluoralkoxyrest mit 1 bis 4 C-Atomen in der Perfluoralkylgruppe ist; ausgenommen Vinylidenfluorid selbst.

3. Konzentrierte, wäßrige kolloidale Dispersion eines Copolymeren des Vinylidenfluorids gemäß Anspruch 1, dadurch gekennzeichnet, daß das Copolymere ein solches aus Vinylidenfluorid und Tetrafluorethylen ist.

4. Konzentrierte, wäßrige, kolloidale Dispersion eines Copolymeren des Vinylidenfluorids gemäß Anspruch 1, dadurch gekennzeichnet, daß das Copolymere ein solches aus Vinylidenfluorid und Hexafluorpropylen ist.

5. Konzentrierte, wäßrige, kolloidale Dispersion eines Copolymeren des Vinylidenfluorids gemäß Anspruch 1, dadurch gekennzeichnet, daß das Copolymere ein solches aus Vinylidenfluorid und Chlortrifluorethylen ist.

6. Konzentrierte, wäßrige, kolloidale Dispersion eines Copolymeren des Vinylidenfluorids gemäß Anspruch 1, dadurch gekennzeichnet, daß das Copolymere ein solches aus Vinylidenfluorid, Hexafluorpropylen und Tetrafluorethylen ist.

7. Konzentrierte, wäßrige, kolloidale Dispersion eines Copolymeren des Vinylidenfluorids gemäß Anspruch 1, dadurch gekennzeichnet, daß das Copolymere ein solches aus Vinylidenfluorid, Perfluorpropyl-perfluorvinylether, Tetrafluorethylen und gegebenenfalls Hexafluorpropylen ist.

8. Konzentrierte, wäßrige, kolloidale Dispersion mindestens eines Copolymeren des Vinylidenfluorids, gemäß einem oder mehreren der Ansprüche 1 bis 7, dadurch gekennzeichnet, daß sie Ammoniumlaurat als Dispersionsstabilisator enthält.

9. Verfahren zur Herstellung einer konzentrierten, kolloidalen, wäßrigen Dispersion eines Copolymeren des Vinylidenfluorids, das mindestens 5 Gew.-% Vinylidenfluorid und neben Vinylidenfluorid mindestens eine weitere fluorolefinische Verbindung enthält, mit einem Feststoffgehalt von 30 bis 65 Gew.-% gemäß Anspruch 1 durch Aufkonzentrieren einer wäßrigen, kolloidalen Dispersion des gleichen Polymeren mit geringerem Feststoffgehalt unter Zugabe eines Dispersionsstabilisators vor oder während des Aufkonzentrierungsprozesses, dadurch gekennzeichnet, daß als Dispersionsstabilisator ein Ammoniumsalz einer Carbonsäure mit 10 bis 14 C-Atomen in einer Menge zugegeben wird, daß deren Gehalt in der aufkonzentrierten Dispersion 2 bis 8 Gew.-%, bezogen auf das Gewicht des Feststoffes der konzentrierten Dispersion, beträgt.

**Claims**

1. A concentrated, aqueous, colloidal dispersion of at least one copolymer of vinylidene fluoride containing at least 5% by weight of vinylidene fluoride and at least one further fluoroolefinic comonomer, having a solids content of 30 to 65% by weight based on the total weight of the concentrated dispersion, and containing a dispersion stabiliser, characterised by having a content of 2 to 8% by weight based on the solids content of the concentrated dispersion, of at least one ammonium salt of a carboxylic acid having 10 to 14 carbon atoms as dispersion stabiliser.

2. A concentrated, aqueous, colloidal dispersion of a copolymer of vinylidene fluoride as claimed in claim 1, characterised in that the copolymer contains, in addition to vinylidene fluoride, at least one further fluoroolefinic comonomer of the formula

$$XYC = CF - Rf$$

in which

X is F, Cl or H and

Y is F, Cl or H and

Rf is F, CF$_3$ or a perfluoroalkoxy radical having 1 to 4 carbon atoms in the perfluoroalkyl group, with the proviso that vinylidene fluoride itself is excepted.

3. A concentrated, aqueous, colloidal dispersion of a copolymer of vinylidene fluoride as claimed in claim 1, characterised in that the copolymer is a copolymer formed from vinylidene fluoride and tetrafluoroethylene.

4. A concentrated, aqueous, colloidal dispersion of a copolymer of vinylidene fluoride as claimed in claim 1, characterised in that the copolymer is a copolymer formed from vinylidene fluoride and hexafluoropropylene.

5. A concentrated, aqueous, colloidal dispersion of a copolymer of vinylidene fluoride as claimed in claim 1, characterised in that the copolymer is a copolymer formed from vinylidene fluoride and chlorotrifluoroethylene.

6. A concentrated, aqueous, colloidal dispersion of a copolymer of vinylidene fluoride as claimed in claim 1, characterised in that the copolymer is a copolymer formed from vinylidene fluoride, hexafluoropropylene, and tetrafluoroethylene.

7. A concentrated, aqueous, colloidal dispersion of a copolymer of vinylidene fluoride as claimed in claim 1, characterised in that the copolymer is a copolymer formed from vinylidene fluoride, perfluoropropyl, perfluorovinyl ether, tetrafluoroethylene, and optionally hexafluoropropylene.

8. A concentrated, aqueous, colloidal dispersion of at least one copolymer of vinylidene fluoride as claimed in claims 1 to 7, characterised in that it contains ammonium laurate as the dispersion stabiliser.

9. A process for the preparation of a concentrated, colloidal, aqueous dispersion of a copolymer of vinylidene fluoride containing at least 5% by weight of vinylidene fluoride and, in addition to vinylidene fluoride, at least one further fluoroolefinic compound, and having a solids content of 30 to 65% by weight as claimed in claim 1, by concentrating an aqueous, colloidal dispersion of the same polymer having a lower solids content by adding a dispersion stabiliser before or during the concentration process, characterised by adding, as the dispersion stabiliser, an ammonium salt of a carboxylic acid having 10 to 14 carbon atoms in an amount such that its content in the concentrated dispersion is 2 to 8% by weight, based on the weight of the solids content of the concentrated dispersion. .

**Revendications**

1. Dispersion colloïdale aqueuse concentrée d'au moins un copolymère du fluorure de vinylidène, qui contient au moins 5% en poids de fluorure de vinylidène et, outre le fluorure de vinylidène, au moins un autre composé fluoroolefinique, ayant un extrait sec de 30 à 65% en poids par rapport au poids total de la dispersion concentrée, et contenant un stabilisateur de dispersion, caractérisée en ce qu'elle contient de 2 à 8% en poids, par rapport à l'extrait sec de la dispersion concentrée, d'au moins un sel d'ammonium d'un acide carboxylique ayant de 10 à 14 atomes de carbone, servant de stabilisateur de dispersion.

2. Dispersion colloïdale aqueuse concentrée d'un copolymère de fluorure de vinylidène selon la revendication 1, caractérisée en ce que le copolymère contient, outre le fluorure de vinylidène, au moins un composé fluoroolefinique supplémentaire de formule

$$XYC = CF - Rf$$

dans laquelle

X = F, Cl, H et

Y = F, Cl, H et

Rf = F, CF$_3$ ou

un radical perfluoralcoxy ayant de 1 à 4 atomes de carbone dans le groupe perfluoralcoxy; à l'exception du fluorure de vinylidène proprement dit.

3. Dispersion colloïdale aqueuse concentrée d'un copolymère du fluorure de vinylidène selon la revendication 1, caractérisée en ce que le copolymère est un copolymère de fluorure de vinylidène et de tétrafluoréthylène.

4. Dispersion colloïdale aqueuse concentrée d'un copolymère du fluorure de vinylidène selon la revendication 1, caractérisée en ce que le copolymère est un copolymère de fluorure de vinylidène et d'hexafluoropropylène.

5. Dispersion colloïdale aqueuse concentrée d'un copolymère du fluorure de vinylidène selon la revendication 1, caractérisée en ce que le copolymère est un copolymère de fluorure de vinylidène et de chlorotrifluoréthylène.

6. Dispersion colloïdale aqueuse concentrée d'un copolymère du fluorure de vinylidène selon la revendication 1, caractérisée en ce que le copolymère est un copolymère de fluorure de vinylidène, d'hexafluoropropylène et de tétrafluoréthylène.

7. Dispersion colloïdale aqueuse concentrée d'un copolymère du fluorure de vinylidène selon la revendication 1, caractérisée en ce que le copolymère est un copolymère de fluorure de vinylidène, d'oxyde de perfluoropropyle et de perfluorovinyle, de tétrafluoréthylène et éventuellement d'hexafluoropropylène.

8. Dispersion colloïdale aqueuse concentrée d'au moins un copolymère du fluorure de vinylidène selon l'une ou plusieurs des revendications 1 à 7, caractérisée en ce qu'elle contient en tant que stabilisateur de dispersion du laurate d'ammonium.

9. Procédé pour la préparation d'une dispersion aqueuse colloïdale concentrée d'un copolymère du fluorure de vinylidène, qui contient au moins 5% en poids de fluorure de vinylidène et, outre le fluorure de vinylidène, au moins un autre composé fluoro-oléfinique, ayant un extrait sec de 30 à 65% en poids, selon la revendication 1, par concentration d'une dispersion colloïdale aqueuse du même polymère, ayant un extrait sec plus faible, par addition d'un stabilisateur de dispersion, avant ou pendant l'opération de concentration, caractérisé en ce qu'on ajoute en tant que stabilisateur de dispersion un sel d'ammonium d'un acide carboxylique ayant de 10 à 14 atomes de carbone, en une quantité telle que sa concentration, dans la dispersion concentrée, soit de 2 à 8% en poids, par rapport au poids de l'extrait sec de la dispersion concentrée.